# EUROPEAN PATENT SPECIFICATION

(11) **EP 2 932 126 B1**
(45) Date of publication and mention of the grant of the patent: **31.05.2017**
(21) Application number: 12812846.9
(22) Date of filing: 14.12.2012
(51) Int. Cl.: F16D 13/52, F16D 13/69

(54) **MULTIPLE-PLATE CLUTCH**
MEHRPLATTEN-KUPPLUNG
EMBRAYAGE À DISQUES MULTIPLES

(43) Date of publication of application: 21.10.2015
(73) Proprietor: Volvo Truck Corporation, 405 08 Göteborg (SE)
(72) Inventor: ERHARD, Hans, S-442 39 Kungälv (SE); HEDMAN, Anders, S-442 67 Marstrand (SE)
(74) Representative: Volvo Technology Corporation
(86) International application number: PCT/EP2012/005167
(87) International publication number: WO 2014/090267

(56) References cited:
- DE-B1- 2 638 902
- JP-U- H02 114 229
- US-A- 4 117 919

## Description

### TECHNICAL FIELD

The present invention relates to the field of friction clutches and especially multiple-plate friction clutches and separating means therefore.

### BACKGROUND ART

Stepped transmissions for vehicles are robust, compact and cost-effective products. A stepped transmission can be designed using gearwheels that rotate about fix axes, with planetary gear trains, or combinations thereof. A typical example of a fix-axes lay-out is shown in DE19821164A1. A modern transmission design using planetary gear trains can be seen in DE102005010210A1. Combinations of fix axes and planetary gear trains are found in, e.g., US5351569 and EP1211436A2. Basically, different gears are obtained by rotationally connecting different parts. This is done by shift clutches that can engage two rotating units. There are two main types of shift clutch; positively engaging tooth clutches and friction clutches. Tooth clutches have an "on-off" behaviour; they are either engaged or disengaged. In general, they can neither be engaged nor disengaged while transferring any significant amount of power. Thus, at gear shifts several vehicle transmission designs with tooth clutches have an interruption of the power transfer between prime mover (engine) and driven wheels. Friction clutches, on the other hand, have the potential of, in a controlled way, transfer torque when slipping. This enables gear shifts with retained power transfer, known as power-shifts. Transmissions with power-shifting ability normally have at least two friction clutches. They may give advantages in terms of performance, comfort and fuel consumption.

For start-off from rest, friction clutches are dominant in vehicles as master clutches in manual transmissions and automated mechanically engaged transmissions.

When transferring torque at slipping conditions, heat is generated in the contacting surfaces of friction clutches. Two of the most common types of friction clutch are dry and wet plate clutches. A main functional difference between these two types is on how the friction heat is taken care of. Dry plate clutches operate without the presence of oil. The heat generated is to a vast extent accumulated in the parts in contact during the slip lapse, and then subsequently conducted and radiated to the surroundings. This is a rather slow process, which limits the slipping capability of dry plate clutches. Moreover, the surfaces in contact are worn, implying a limited durability. As master clutches in most on-road vehicle applications, this is sufficient. However, for more demanding applications, dry plate clutches are not suitable.

Wet plate clutches are cooled by an oil flow that is supplied to the surfaces in contact. The heat is absorbed by the oil and transported to the surroundings. Compared to dry plate clutches, this is a considerably more rapid process. Thereby, significantly lower mass for heat accumulation is required, and the slipping capacity can easily be made large. This is a major reason for the dominant position of wet plate clutches in off-road vehicle transmissions as well as in power-shifting transmissions for on-road vehicles.

The cooling oil flow has a lubricating side effect in wet plate clutches. This has a considerable impact on the friction in the contacting surfaces. In order to compensate for that, wet plate clutches usually have multiple plates. Every second plate is rotationally connected to one of the rotating units of the clutch. The plates in between are connected to the other rotating unit. This multitude of plates has some advantages. Firstly, the overall contact surface is large, giving efficient cooling. Secondly, one actuation force can act on all surfaces.

However, the plurality of plates in a wet plate clutch will cause power losses in disengaged state when the rotating units have different rotational speeds. Oil between the surfaces of two plates results in viscous drag. Further, the plates may wobble and bounce against each other. There may also be a large distance between one pair of neighbouring plates, while other plates are closer to each other. All this, separate or in combination, will give power losses.

There are some different ways available to decrease the power losses in disengaged wet plate clutches. Arranging more or less radial grooves in the friction surfaces can make a significant impact, as shown in, e.g., EP0848176A1. A large average axial clearance between the plates is also of advantage. A too large clearance may have a negative influence on the controllability of the clutch, though. Some plates may "cling" to each other, causing large power losses. This can be counteracted to some extent by making some of the plates shaped like diaphragm springs, as can be seen in US2540965. A more efficient way to reduce the power losses is to add resilient parts between neighbouring plates connected to the same rotating unit of the clutch. This can be seen in, for instance, DE102010008937A1 and DE102010009672A1. Those tend to be rather costly, though, requiring a large number of small parts to handle and assemble.

US 4 117 919 discloses a wet plate clutch including an arrangement for forcing and holding the plates apart in disengaged state of the clutch. The wet plate clutch has centrifugal weights in the form of balls or rotationally symmetrical plates disposed between like plates, which weights are forced radially inwardly by the plates when in the engaged position of the clutch, and which weights are moveable radially outwardly by centrifugal forces to press like plates apart when the clutch is in a disengaged position.

A problem with the solution according to US 4 117 919 is that the separation of the plates is not sufficient, in particular at low speed, where the centrifugal forces upon the separating means are low, such that substantial power losses still are present. This effect can be minimised in that the mass of the separating means is increased, whereby an increase in weight is undesirable. There is thus a need for an improved multiple-plate clutch removing the above mentioned disadvantages.

### SUMMARY

The object of the present invention is to provide an inventive multiple-plate clutch where the previously mentioned problems are at least partly avoided. This object is achieved by the features defined in claim 1.

A multiple-plate clutch according to the invention comprises a first set of plates and a second set of plates. One of said first and second set of plates is a set of internal plates and the other is a set of external plates. The plates of each set being mounted on a respective carrier so that they are axially displaceable but not rotatable relative to the respective plate carrier. Said first set is provided with separating means, which;
- is extending axially over all of the plates of said set and
- is arranged in between each pair of adjacent plates of said first set and
- is provided such that said separating means is adapted to wedge in between the respective adjacent plates.

The separating means is provided with force enhancement means, which is adding a radial force to the separating means which presses the separating means in-between said adjacent plates. According to the invention the force enhancement means comprises a lever arm with a flyweight. The lever arm is provided with a first flyweight and acts upon said separating means. The lever arm is provided upon a pivot pin fixed to the plate carrier corresponding to said first plate set, whereby said first flyweight is arranged upon said lever arm at a distance from said pivot pin and said separating means, such that centrifugal force acting upon said flyweight generates an enhancement force acting upon said separating means, such that centrifugal force acting upon said flyweight generates a separation force wedging said separating means in between respective adjacent plates. In a preferred embodiment, the force enhancement means further comprises a resilient member acting upon said separating means to enhance said wedging. Due to the use of force enhancement means instead of just relying upon a centrifugal force upon the separating means, the separating means can alternatively/also be arranged upon the outer set of plates. Separating means suitable to use with the present invention are disclosed in US 4 117 919.

Due to the radial force from the resilient member, which is acting upon the separating means, the separating means will wedge in-between the plates of the multiple-plate clutch also when the clutch is rotating with a low speed. Thereby a sufficient separation of the clutch plates is ensured, whereby the power losses in the clutch is minimised, due to less viscous drag, clapper between plates and a faster separation of the plates. The resilient member contributes with a high force upon the separating means in relation to its weight, whereby the solution is weight effective and ensures that the separating function is independent of the speed of rotation of the set of plates.

The use of the force enhancement means enables an arrangement of the separating means at either an inner and/or outer set of clutch plates. The force enhancement means can apply its separating force either in the same direction as the centrifugal force acting upon the separating means or in the opposite direction.

When the separating means is acting upon an inner set of clutch plates, the centrifugal force upon the separating means acts in the same direction as the force enhancement means. However, when the separating means is acting upon an outer set of clutch plates, the centrifugal force upon the separating means acts in the opposite direction, whereby in such a configuration, the weight of the separating means should be minimised.

The resilient member can be a helical spring, a leaf spring, rubber spring or any other suitable springing means, which is arranged in-between the carrier and the clutch plates, such that the resilient force from the resilient member can act upon the separating means and press the separating means in between the clutch plates.

An advantageous type of resilient member for the application is a ring spring. One or a plurality of ring springs can be arranged coaxial with the disks of said multiple-plate clutch, whereby each ring spring act upon all of said separating means, whereby the number of parts of the separating means is held down. With the use of ring springs arranged coaxial with the disks of the multiple plate clutch, the total number of springs be can be held down. Further, an equal force distribution upon the separating means is facilitated by the use of ring springs.

The ring springs are arranged such in axial direction that a resilient force upon the separating means is acting symmetrically there upon. This can be achieved in that one ring spring is arranged such that it acts at the axial centre of the separating means and/or that at least one pair of ring springs are arranged at equal distance from the axial centre of the separating means.

By adding a lever arm with a flyweight according to the invention the force contribution from the force enhancement means is increased. The centrifugal force upon the separating means the force from the resilient member and the force from the lever arm with its flyweight all act in the same direction. The lever arm with its flyweight contributes to a high force upon the separating means, in relation to its weight. The lever arm increases the effect of the force from the flyweight upon the separating means.

One lever arm with flyweight can be arranged to act upon the separating means, for each wedging member/protrusion upon the separating means. Alternatively one lever arm with flyweight can be assigned for one separating means.

The lever arm could also be used as a separate enhancement means, without assistant of the resilient member.

The separating means can be arranged at either the inner periphery of said first plate set or the outer periphery of said first plate set.

Depending on if the separating means is arranged at the inner or the outer periphery of the plate set, the separating means is pressed radially outward or radially inward by the lever arm, when the flyweight is subjected to a centrifugal force. The relation between the pivot pin, the flyweight and the separating means is adapted depending on if it is an inner or outer set of plates the separating means is acting on.

When the separating means is arranged at the outer periphery it is important to keep the separating means as light as possible, since the separating means are to be pressed against the centrifugal force upon it, by the force enhancement means.

Due to the force enhancement means a greater force upon the separating means can be achieved, without an increase in weight of the clutch arrangement. By just using separating means, which separates the clutch plates by pure centrifugal force, the weight of the separating means and thereby the clutch must be increased considerably to achieve the same separating force. By using a resilient member and/or a lever arm with a flyweight, the force upon the separating means can be increased without adding much weight to the clutch. The force enhancement means also realises an arrangement of the separating means at the outer periphery of a plate set, due to that both the force from the resilient member and the force from the lever arm upon the separating means can act against a centrifugal force acting upon the separating means.

### BRIEF DESCRIPTION OF THE DRAWINGS

The present invention will now be described in detail with reference to the figures, wherein:
- Figure 1: shows a schematic cross section view of a part of a clutch with a resilient member which can be used in combination with the force enhancement means according to the invention using a lever arm with a flyweight,
- Figure 2: shows a schematic cross section view of a part of a clutch with a resilient member which can be used in combination with the force enhancement means according to the invention using a lever arm with a flyweight,
- Figure 3: shows a schematic drawing of a lever arm according to the invention,
- Figure 4: shows a schematic drawing of a lever arm according to the invention.

### DETAILED DESCRIPTION

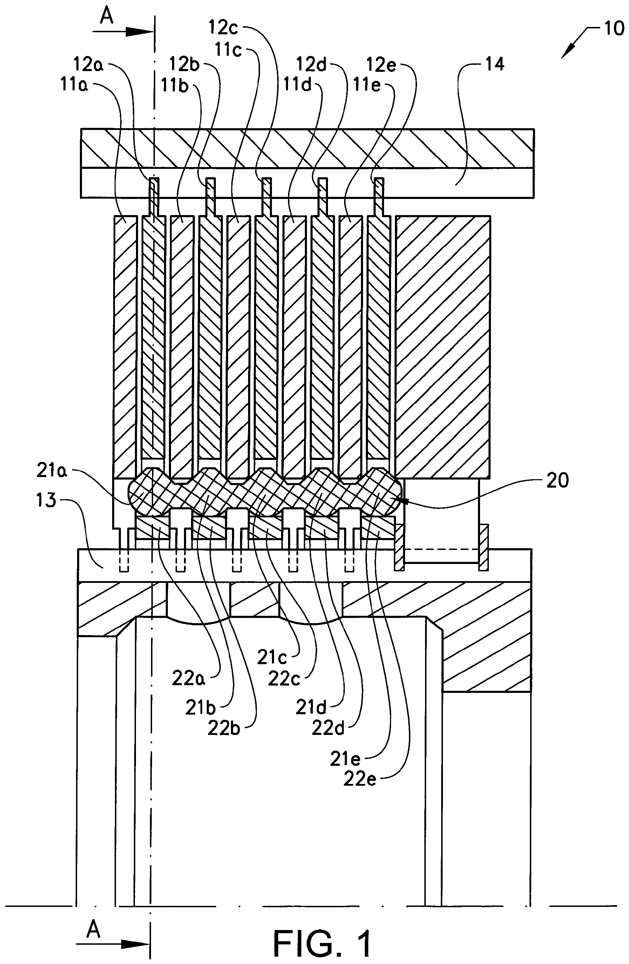

Figure 1 discloses a part of a multiple-plate clutch 10, having an inner clutch set 11 provided with a plurality of inner clutch plates 11 a, b, c, d, e and an outer clutch set 12 provided with a plurality of outer clutch plates 12 a, b, c, d, e. The multiple-plate clutch is provided within a not shown clutch housing. The inner and outer clutch sets 11, 12 are arranged upon an inner and outer plate carrier 13, 14 upon which the clutch plates 11 a-e, 12 a-e are arranged such that the clutch plates 11 a-e, 12 a-e are rotationally fixed thereupon and displaceable in axial direction. The general features and functions of a multiple-plate clutch 10 are known and will therefore not be further explained. The multiple-plate clutch 10 disclosed in figure 1 is provided with a separating means 20, which is provided as an axially extending bar provided with protrusions 21 a-e intended to protrude in between the individual inner clutch plates 11 a-e. The separating means 20 can also be provided such that each protrusion 21 a-e is an individual entity between each of the clutch plates 11 a-e, such as a spherical member or the like. Each protrusion 21 a-e has a wedging part between each pair of neighbouring inner clutch plates 11a-e. In operation, centrifugal force acts upon the separating means 20, whereby the protrusions 21 a-e will tend to wedge deeper in between the inner clutch plates 11a-e. Thereby, the first clutch plates 11a-e are being separated. Separating means 20 as described are already know from US 4 117 919. The protrusions 21 a-e can have a spherical surface, wedge shaped or any other shape suitable to wedge the protrusions in-between to clutch plates 11 a-e. The protrusions 21 a-e can further be an integrated part of the axially extending bar or be individual elements.

Further, the multiple-plate clutch 10 disclosed in figure 1 is provided with inventive force enhancement means 22, which in figure 1 is provided as a resilient members 22a-e, which is arranged between the separating means 20 and the plate carrier 13.

When the multiple-plate clutch 10 is engaged, the clutch plates 11a-e will be pressed out of the space between the clutch plates 11a-e and when the multiple-plate clutch 10 is disengaged, the clutch plates will be separated properly by the separating means 20. The separating means 20 are pressed into the spaces between the clutch plates 11a-e by a separating force, which is composed of a centrifugal force acting upon the separating means 20 and a force enhancement force from the force enhancement means 22a-e. The magnitude of the centrifugal force is dependent on the rotational speed of the inner plate set 11 and the weight of the separating means 20. Due to the resilient member 22a-e the separating force is enhanced, with a relative small extra weight. The fraction of the force enhancement force of the whole separating force is increased at low rotation speeds, since the centrifugal force upon the separating means 20 decreases and the force enhancement force from the resilient members 22a-e is constant.

Further, since the separating force contribution from the resilient members 22a-e is constant and essentially independent of the centrifugal force, it allows the separating means 20 to be arranged at the outer plate set 12. If this is done, the force enhancement means 22a-e acts against the centrifugal force upon the separating means 20, whereby the separating means 20 is to be held as light as possible, in order to minimise the centrifugal force acting thereupon.

The resilient member 22a-e in figure 1 is provided as a one ring spring 22a-e inbetween each inner clutch plate 11 a-e, and thereby for each protrusion 21a-e. It is however also possible to provide the clutch with fewer resilient members 22a-e as long as they are arranged such that an equal force distribution is achieved upon the separating means 20.

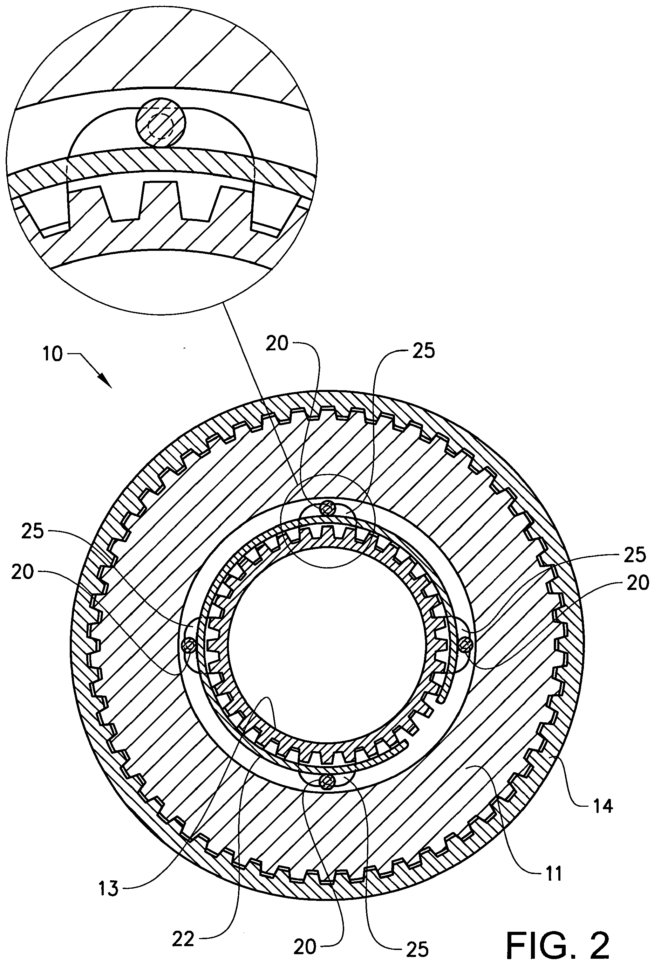

Figure 2 discloses a cut out (A-A in figure 1) axial view of the multiple-plate clutch 10 a, the outer clutch plate 12a. From figure 2 it can be seen that the resilient member 22a acts between the plate carrier 13 and the separating means 20. The separating means 20 are arranged in cut outs 25 in the inner clutch set 11.

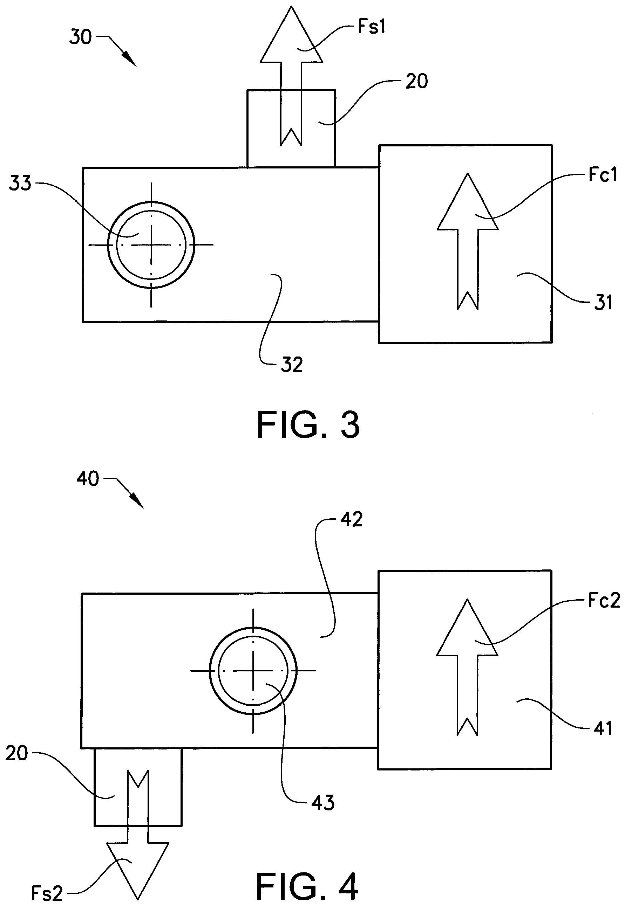

Figure 3 discloses another enhancement means 30, which can be used together with the resilient member in figure 1 and 2 or as a standalone enhancement means 30. The enhancement means 30 comprises a flyweight 31, a lever arm 32 and a pivot pin 33.

The force enhancement means 30 uses a flyweight and lever action to enhance the plate separation. Figure 3 shows an axial view of a lever-type plate separation force enhancement means 30, which is adapted to be used with an inner set of plates 11. A lever arm 32 is arranged such that it can pivot about a pivot pin 33 and arranged thereupon at a first end. The pivot pin 33 is fixed to the plate carrier 13. At a second end of the lever arm 32 a flyweight 31 is arranged. The lever arm 32 acts upon the separating means 20 in between the flyweight 31 and the pivot pin 33.

Due to the lever arm 32, the radial force component Fs1 acting upon the separating means 20 is larger than the radial centrifugal force Fc1 on the flyweight 31. The force enhancement means 30, thereby achieves a higher force upon the separating means 20, and can keep the weight down in comparison if the same force were to be created by just a centrifugal force acting directly upon the separating means 20.

Figure 4 shows an embodiment of the force enhancement means 40 that uses lever action to enhance the plate separation. The force enhancement means 40 is however adapted to be used at the outer plate set 12. The force enhancement means 40 in figure 4 has the same components as the force enhancement means 30 in figure 3, i.e. a lever arm 42, a flyweight 41 and a pivot pin 43. However, since the centrifugal force upon the flyweight 41 acts in the opposite direction as the separating means 20 upon the clutch plates 12a-e, the pivot pin 43 is arranged in between the flyweight 41 and the position where the lever arm 42 acts upon the separating means 20.

In the embodiments shown in figure 3 and 4 respectively the pivot pin 33, 43 is supported by and attached to the plate carrier 13, 14.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Multiple-plate clutch (10) comprising a first set of plates (11) and a second set of plates (12), wherein one of said first and second set of plates (11, 12) is a set of internal plates (11a-e) and the other is a set of external plates (12a-e), the plates (11a-e; 12a-e) of each set (11; 12) being mounted on a respective plate carrier (13; 14) so that they are axially displaceable but not rotatable relative to the respective plate carrier (13; 14), wherein at least said first set (11) is provided with separating means (20), which;
- is extending axially over all of the plates (11a-e; 12a-e) of at least said first set of plates (11) and
- is arranged in between each pair of adjacent plates (11 a-e; 12a-e) of at least said first set of plates (11) and
- is provided such that said separating means (20) is adapted to wedge in between the respective adjacent plates (11a-e; 12a-e),
said separating means (20) is provided with force enhancement means (22a-e; 30; 40), which is adding a radial force to said separating means (20),
**characterised in that**, said force enhancement means (30; 40) comprises a lever arm (32; 42), acting upon said separating means (20) and which is provided with a first flyweight (31; 32), wherein said lever arm (32; 42) is provided upon a pivot pin (33, 43) arranged upon the plate carrier (13; 14) corresponding to one of said plate sets (11, 12), whereby said first flyweight (31; 41) is arranged upon said lever arm (32; 42) at a distance from said pivot pin (33; 43) and said separating means (20), such that centrifugal force (Fc1; Fc2) acting upon said flyweight (31; 41) generates a separation force (Fs1,Fs2) wedging said separating means (20) in between respective adjacent plates (11a-e; 12a-e).

2. Multiple-plate clutch (10) according to claim 1, wherein said force enhancement means (22a-e) comprises a resilient member (22a-e) acting upon said separating means (20) to enhance said wedging in between the respective adjacent plates (11a-e; 11 a-e)

3. Multiple-plate clutch (10) according to claim 2, wherein said resilient member (22a-e) is a helical spring, a leaf spring, rubber spring or any other suitable springing means.

4. Multiple-plate clutch (10) according to claim 2, wherein said resilient member is one or a plurality of ring springs (22a-e) arranged coaxial with said multiple-plate clutch (10) and each ring spring (22a-e) acting upon all of said separating means (20).

5. Multiple-plate clutch (10) according to claim 4, wherein a ring spring (22a-e) is provided between each of said inner clutch plates 11a-e) along a distance corresponding to a thickness of said set of plates (11).

6. Multiple-plate clutch (10) according to any of the preceding claims, wherein, said separating means (20) is arranged at the inner periphery of said first plate set (11), which is an inner plate set (11), and whereby said separating means (20) is pressed radially outward by said lever arm (32).

7. Multiple-plate clutch (10) according to any of the preceding claims, wherein said separating means (20) is arranged at the outer periphery of said second plate set (12), whereby said separating means (20) is pressed radially inward by said lever arm (42).

## Patentansprüche

1. Mehrplatten-Kupplung (10), umfassend einen ersten Satz von Platten (11) und einen zweiten Satz von Platten (12), wobei einer des ersten und des zweiten Satzes von Platten (11, 12) ein Satz von inneren Platten (11 a-e) und der andere ein Satz von äußeren Platten (12a-e) ist, wobei die Platten (11a-e; 12a-e) jedes Satzes (11; 12) auf einem entsprechenden Plattenträger (13; 14) angebracht sind, so dass sie axial verschiebbar, aber nicht bezüglich des entsprechenden Plattenträgers (13; 14) drehbar sind, wobei wenigstens der erste Satz (11) mit einem Trennmittel (20) versehen ist, das
- sich axial über alle Platten (11a-e; 12a-e) wenigstens des ersten Satzes von Platten (11) erstreckt und
- zwischen jedem Paar benachbarter Platten (11 a-e; 12a-e) wenigstens des ersten Satzes von Platten (11) angeordnet ist und
- so vorgesehen ist, dass das Trennmittel (20) dafür eingerichtet ist, zwischen den entsprechenden benachbarten Platten (11 a-e; 12a-e) verkeilt zu werden,
wobei das Trennmittel (20) mit einem Kraftverstärkungsmittel (22a-e; 30; 40) versehen ist, das dem Trennmittel (20) eine radiale Kraft hinzufügt,
**dadurch gekennzeichnet, dass** das Kraftverstärkungsmittel (30; 40) einen Hebelarm (32; 42) umfasst, der auf das Trennmittel (20) einwirkt und mit einem ersten Fliehgewicht (31; 32) versehen ist, wobei der Hebelarm (32; 42) an einem Drehzapfen (33, 43) vorgesehen ist, der an dem Plattenträger (13; 14) angeordnet ist, der einem der Plattensätze (11, 12) entspricht, wobei das erste Fliehgewicht (31; 41) an dem Hebelarm (32; 42) von dem Drehzapfen (33; 43) und dem Trennmittel (20) beabstandet angeordnet ist, so dass eine Zentrifugalkraft (Fc1; Fc2), die auf das Fliehgewicht (31; 41) einwirkt, eine Trennkraft (Fs1, Fs2) erzeugt, die das Trennmittel (20) zwischen entsprechenden benachbarten Platten (11 a-e; 12a-e) verkeilt.

2. Mehrplatten-Kupplung (10) nach Anspruch 1, wobei das Kraftverstärkungsmittel (22a-e) ein elastisches Element (22a-e) umfasst, das auf das Trennmittel (20) einwirkt, um das Verkeilen zwischen den entsprechenden benachbarten Platten (11 a-e; 12a-e) zu verstärken.

3. Mehrplatten-Kupplung (10) nach Anspruch 2, wobei das elastische Element (22a-e) eine Schraubenfeder, eine Blattfeder, eine Gummifeder oder ein anderes geeignetes Federungsmittel ist.

4. Mehrplatten-Kupplung (10) nach Anspruch 2, wobei das elastische Element eine oder eine Vielzahl von Ringfedern (22a-e) ist, die koaxial zu der Mehrplatten-Kupplung (10) angeordnet sind, und jede Ringfeder (22a-e) auf alle Trennmittel (20) einwirkt.

5. Mehrplatten-Kupplung (10) nach Anspruch 4, wobei eine Ringfeder (22a-e) zwischen allen inneren Kupplungsplatten (11 a-e) entlang einer Strecke angeordnet ist, die einer Dicke des Satzes von Platten (11) entspricht.

6. Mehrplatten-Kupplung (10) nach einem der vorigen Ansprüche, wobei das Trennmittel (20) an der inneren Peripherie des ersten Satzes von Platten (11) angeordnet ist, der ein innerer Plattensatz (11) ist, und wobei das Trennmittel (20) durch den Hebelarm (32) radial nach außen gedrückt wird.

7. Mehrplatten-Kupplung (10) nach einem der vorigen Ansprüche, wobei das Trennmittel (20) an der äußeren Peripherie des zweiten Satzes von Platten (12) angeordnet ist, wobei das Trennmittel (20) durch den Hebelarm (42) radial nach innen gedrückt wird.

## Revendications

1. Embrayage à disques multiples (10) comprenant un premier ensemble de disques (11) et un deuxième ensemble de disques (12), où l'un desdits premier et deuxième ensembles de disques (11, 12) est un ensemble de disques internes (11 a-e) et l'autre est un ensemble de disques externes (12a-e), les disques (11 a-e ; 12a-e) de chaque ensemble (11 ; 12) étant montés sur un porte-disques respectif (13 ; 14) de sorte qu'ils puissent se déplacer axialement mais ne puissent pas tourner par rapport au porte-disques respectif (13 ; 14), où au moins ledit premier ensemble (11) est muni d'un moyen de séparation (20), qui :
- s'étend axialement sur tous les disques (11 a-e ; 12a-e) d'au moins ledit premier ensemble de disques (11) et
- est agencé entre chaque paire de disques adjacents (11 a-e ; 12a-e) d'au moins ledit premier ensemble de disques (11) et
- est prévu de sorte que ledit moyen de séparation (20) soit adapté pour se caler entre les disques adjacents respectifs (11 a-e ; 12a-e),
ledit moyen de séparation (20) est muni d'un moyen de renforcement de force (22a-e ; 30 ; 40), qui ajoute une force radiale audit moyen de séparation (20),
**caractérisé en ce que** ledit moyen de renforcement de force (30 ; 40) comprend un bras de levier (32 ; 42), agissant sur ledit moyen de séparation (20) et qui est muni d'une première masselotte (31 ; 32), où ledit bras de levier (32 ; 42) est prévu sur un axe de pivotement (33, 43) agencé sur le porte-disques (13 ; 14) correspondant à l'un desdits ensembles de disques (11, 12), moyennant quoi ladite première masselotte (31 ; 41) est agencée sur ledit bras de levier (32 ; 42) à une distance dudit axe de pivotement (33 ; 43) et dudit moyen de séparation (20), de sorte qu'une force centrifuge (Fc1 ; Fc2) agissant sur ladite masselotte (31 ; 41) génère une force de séparation (Fs1, Fs2) calant ledit moyen de séparation (20) entre des disques adjacents respectifs (11a-e ; 12a-e).

2. Embrayage à disques multiples (10) selon la revendication 1, dans lequel ledit moyen de renforcement de force (22a-e) comprend un élément élastique (22a-e) agissant sur ledit moyen de séparation (20) pour renforcer ledit calage entre les disques adjacents respectifs (11 a-e ; 11 a-e).

3. Embrayage à disques multiples (10) selon la revendication 2, dans lequel ledit élément élastique (22a-e) est un ressort hélicoïdal, un ressort à lames, un ressort en caoutchouc ou tout autre moyen de ressort approprié.

4. Embrayage à disques multiples (10) selon la revendication 2, dans lequel ledit élément élastique est un ou plusieurs ressort(s) annulaire(s) (22a-e) agencé(s) de manière coaxiale avec ledit embrayage à disques multiples (10) et chaque ressort annulaire (22a-e) agissant sur tout ledit moyen de séparation (20).

5. Embrayage à disques multiples (10) selon la revendication 4, dans lequel un ressort annulaire (22a-e) est prévu entre chacun desdits disques d'embrayage internes (11 a-e) sur une distance correspondant à une épaisseur dudit ensemble de disques (11).

6. Embrayage à disques multiples (10) selon l'une des revendications précédentes, dans lequel ledit moyen de séparation (20) est agencé à la périphérie interne dudit premier ensemble de disques (11), qui est un ensemble de disques internes (11), et moyennant quoi ledit moyen de séparation (20) est pressé radialement vers l'extérieur par ledit bras de levier (32).

7. Embrayage à disques multiples (10) selon l'une des revendications précédentes, dans lequel ledit moyen de séparation (20) est agencé à la périphérie externe dudit deuxième ensemble de disques (12), moyennant quoi ledit moyen de séparation (20) est pressé radialement vers l'intérieur par ledit bras de levier (42).
